# EUROPEAN PATENT APPLICATION

(11) **EP 2 603 037 A1**
(43) Date of publication of application: **12.06.2013**
(21) Application number: 11814533.3
(22) Date of filing: 28.07.2011
(51) Int. Cl.: H04W 28/24, H04W 8/08, H04W 8/20, H04W 92/04

(54) **MOBILE COMMUNICATION METHOD AND PRIORITY LEVEL CONTROL NODE**

(30) Priority: 04.08.2010 JP 2010175271
(71) Applicant: NTT DOCOMO, INC., Chiyoda-ku Tokyo 100-6150 (JP)
(72) Inventor: TOKUNAGA, Kazuhito, Tokyo 100-6150 (JP); YOSHIDA, Naomasa, Tokyo 100-6150 (JP)
(74) Representative: HOFFMANN EITLE
(86) International application number: PCT/JP2011/067232
(87) International publication number: WO 2012/017906

(57) **Abstract**

The present invention is directed to providing a mobile communication method and a priority control node which provide information such as cell IDs from an EPC network to an IMS platform. According to the mobile communication method of the present invention, a call control node (P-CSCF) transmits an AAR signal of the Diameter Base Protocol to a priority control node (PCRF), the priority control node (PCRF) identifies a session of the LTE network, and the priority control node (PCRF) transmits an AAA signal of the Diameter Base Protocol in response to the AAR signal of the Diameter Base Protocol, and the serving cell ID of a mobile terminal, to the call control node (P-CSCF).

## Description

### TECHNICAL FIELD

The present invention relates to a mobile communication method and a priority control node that provide information such as cell IDs from an EPC network to an IMS platform.

### BACKGROUND ART

The IMS (IP Multimedia Subsystem) is set as a global 3GPP (3rd Generation Partnership Project) standard, for the purpose of providing IP-based multimedia communication services. The IMS refers to the concept of a core network that communicates through IP which does not rely upon an access network. Each access network is referred to as "IP-CAN," and it is possible to accommodate a plurality of IP-CANs seamlessly. The IMS does not rely on an access network, and therefore is able to provide common network services (for example, answering machine, call-waiting, and transfer services) in varying access networks. A mobile communication system to utilize this IMS is set forth in non-patent literature 1.

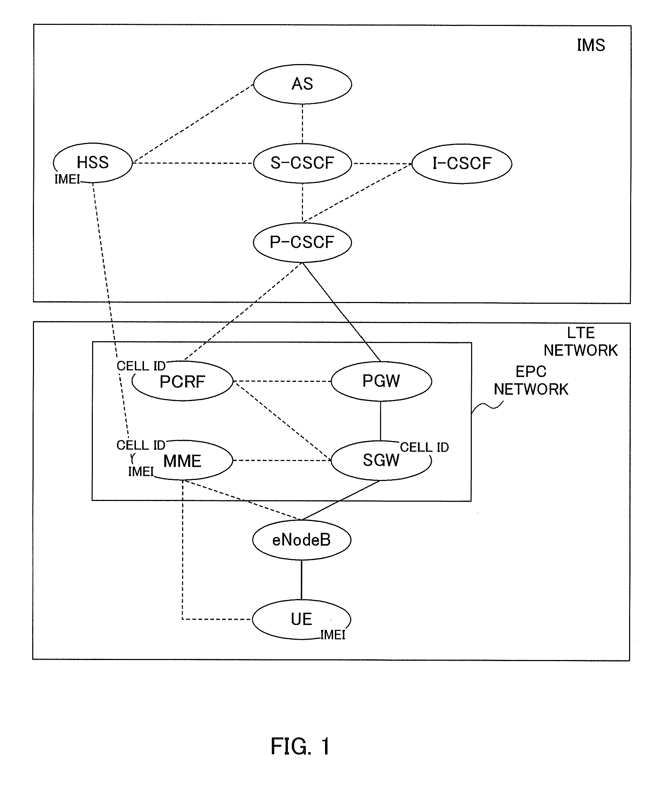

FIG. 1 is a diagram showing a network architecture when the access network is an LTE (Long Term Evolution) network in the IMS. In global 3GPP standards, a mobile IP transmission network is set as an EPC (Evolved Packet Core) network, and a service control network is set as an IMS. In the LTE access system, an eNodeB, which serves as a base station therein, is accommodated by an MME (Mobility Management Entity) and a SGW (Serving-GateWay). The MME has an interface with a mobile terminal UE (User Equipment) that is present in the radio zone of the LTE access system, and performs mobility management of the mobile terminal UE, authorization of the mobile terminal and setup control of the IP transmission route with the mobile terminal. The SGW performs transmission control of IP packets based on commands by the MME.

Furthermore, in the EPC network, a PGW (PDN (Packet Data Network)-GateWay) and a PCRF (Policy and Charging Rules Function) are set up. The PGW has connecting points with the PDN such as the Internet and the IMS, and receives all the IP packets from the PDN to the mobile terminal UE. The PCRF determines IP packet transmission policies such as the QoS (Quality of Service) and charging rules, for performing transmission quality control in the PGW and the SGW.

The IMS mainly includes a session control function (CSCF) and an application service control function (AS). Furthermore, the IMS includes a user information storage function (HSS).

The CSCF (Call Session Control Function) is the function to execute session control, which is the core of the control of the service control network, and sets up and releases communication sessions between mobile terminals, selects the AS according to the terms of service, and transfers an SIP (Session Initiation Protocol) signal, which is the session control protocol. The CSCF is divided into three functional components of the P-CSCF (Proxy-CSCF), the S-CSCF (Serving-CSCF) and the I-CSCF (Interogating-CSCF).

The AS (Application Server) cooperates with mobile terminals and performs common basic control or overall control of each application service. The HSS (Home Subscriber Server) is a database to handle user information of mobile terminals that access the service control network. Note that, in FIG. 1, the broken line represents the C-Plane (user data) and the bold line represents the U-Plane (control signals).

On the other hand, in non-patent literature 1, information such as cell ID information is defined. A cell ID is the identifier of an area, into which the coverage area of one radio base station is divided smaller, and is defined as a CGI (Cell Global Identity) in LTE. Furthermore, non-patent literature 1 defines an IMEI (International Mobile Equipment Identity), which is the number to identify a mobile terminal.

### CITATION LIST

### NON-PATENT LITERATURE

Non-Patent Literature 1: 3GPP TS23.003

### SUMMARY OF THE INVENTION

### TECHNICAL PROBLEM

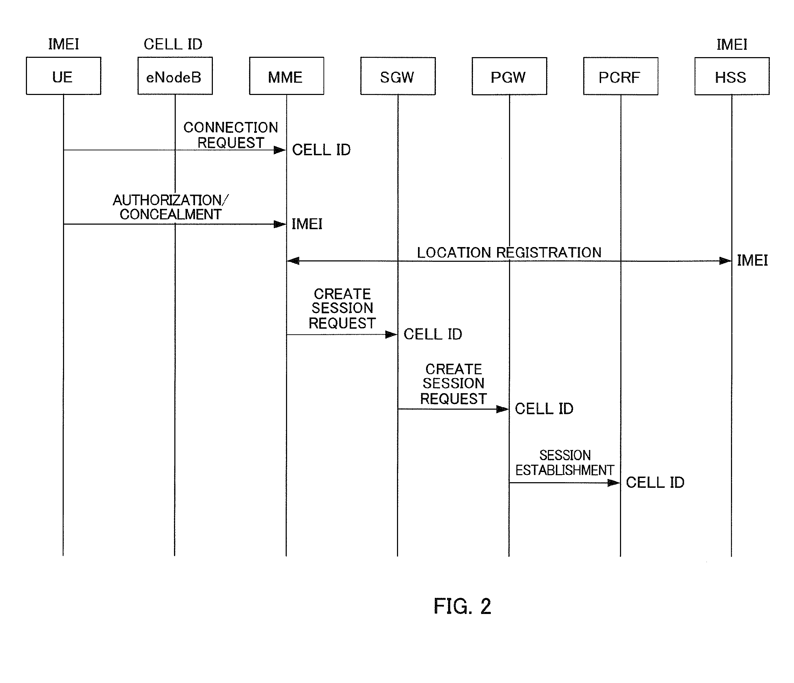

FIG. 2 is a sequence diagram for explaining attachment control from the LTE access system. First, the mobile terminal UE issues a connection request to the MME via the eNodeB. At this time, the eNodeB sends the cell ID to the MME. After that, the mobile terminal UE executes security steps such as authorization and concealment. At this time, the mobile terminal UE sends the IMEI to the MME. After that, the MME transmits a location registration request message to the HSS. At this time, the MME sends the IMEI to the HSS. Furthermore, the MME issues a create session request to the SGW and the PGW. At this time, the MME sends the cell ID to the SGW. After that, when a session is established between the PGW and the PCRF, the cell ID is transmitted to the PCRF via the PGW. In this way, by means of the attachment control, as shown in FIG. 1, the cell ID is held in the MME, the SGW and the PCRF, and the IMEI is held in the MME and the HSS.

According to the specifications of the IMS in the present global 3GPP standards, the IMS is able to acquire a cell ID from a mobile terminal but is unable to acquire a cell ID from an access network. However, from the security perspective concerning tempering and so on, it is preferable to allow the serving cell ID of a mobile terminal, to be acquired from the access network. Furthermore, as representative usages of a reliable cell ID, there are a component that can be relied upon charging, a location specifying component used upon tapping of communication, a component for specifying an adequate connection destination upon initiating an emergency call, and other components used upon providing IMS services. From this perspective, too, it is preferable to allow the serving cell ID of a mobile terminal, to be acquired from an access network. Furthermore, the IMEI is also preferably acquired from the access network, in order to provide services that match the functions of the mobile terminal.

The present invention has been made in view of the above, and it is therefore an object of the present invention to provide a mobile communication method and a priority control node which provide information such as cell IDs from an EPC network to an IMS platform.

### SOLUTION TO PROBLEM

A mobile communication method according to the present invention includes the steps of: at a call control node, transmitting a QoS setup request signal to a priority control node; at the priority control node, identifying a session of an access network; and at the priority control node, transmitting an answer signal in response to the QoS setup request signal to the call control node, and, in this mobile communication method, the priority control node transmits a serving cell ID of a mobile terminal to the call control node with the answer signal.

A priority control node according to the present invention is a priority control node that holds a serving cell ID of a mobile terminal, and, with this priority control node, after a session of an access network is identified, the priority control node transmits an answer signal in response to a QoS setup request signal that has been transmitted from a call control node, to the call control node, with the serving cell ID of the mobile terminal.

### TECHNICAL ADVANTAGES OF THE INVENTION

According to the present invention, information such as cell IDs is transmitted to an IMS from an LTE network, not from a mobile terminal, so that it is possible to handle information of high reliability such as cell IDs in the IMS. Furthermore, since the IMS is able to acquire information about a mobile terminal, it is possible to provide to services to match the type of the mobile terminal.

### BRIEF DESCRIPTION OF THE DRAWINGS

FIG. 1 is a diagram showing a network architecture in the event the access network is an LTE network, in an IMS;
FIG. 2 is a sequence diagram for explaining attachment control from an LTE access system;
FIG. 3 is a diagram showing a network architecture in the event the access network is an LTE network, in an IMS, according to embodiments 1 and 2 of the present invention;
FIG. 4 is a sequence diagram showing the operations of a mobile communication method according to embodiment 1 of the present invention;
FIG. 5 is a sequence diagram showing the operations of a mobile communication method according to embodiment 2 of the present invention;
FIG. 6 is a diagram showing a network architecture in the event the access network is an LTE network, in an IMS, according to embodiment 3 of the present invention;
FIG. 7 is a diagram showing a network architecture in the event the access network is an LTE network, in an IMS, according to embodiment 3 of the present invention; and
FIG. 8 is a diagram showing a network architecture in the event the access network is an LTE network, in an IMS, according to embodiment 3 of the present invention.

### DESCRIPTION OF EMBODIMENTS

The present inventors have focused on the fact that a signal for setting up the QoS is transmitted and received between a call control node P-CSCF and a priority control node PCRF at the timing a mobile terminals initiates a call, and found out that cell ID information can be sent from an LTE network to an IMS by superimposing the cell ID information upon that signal (PCRF cooperation).

Furthermore, the present inventors have also focused on the fact that signals are transmitted and received between a home subscriber server HSS and an application server AS when providing services, and found out that IMEI information can be sent from an LTE network to an IMS by superimposing the IMEI information upon that signal (HSS cooperation).

Furthermore, the present inventors have found out defining a collection node on a service control network (IMS), collecting a cell ID and IMEI by this collection node, and providing these to nodes of the IMS.

Now, embodiments of the present invention will be described below in detail with reference to the accompanying drawings.

### (Embodiment 1)

According to the present embodiment, transmission of cell ID information from an LTE network to an IMS by superimposing the cell ID information upon a signal for setting up the QoS will be described.

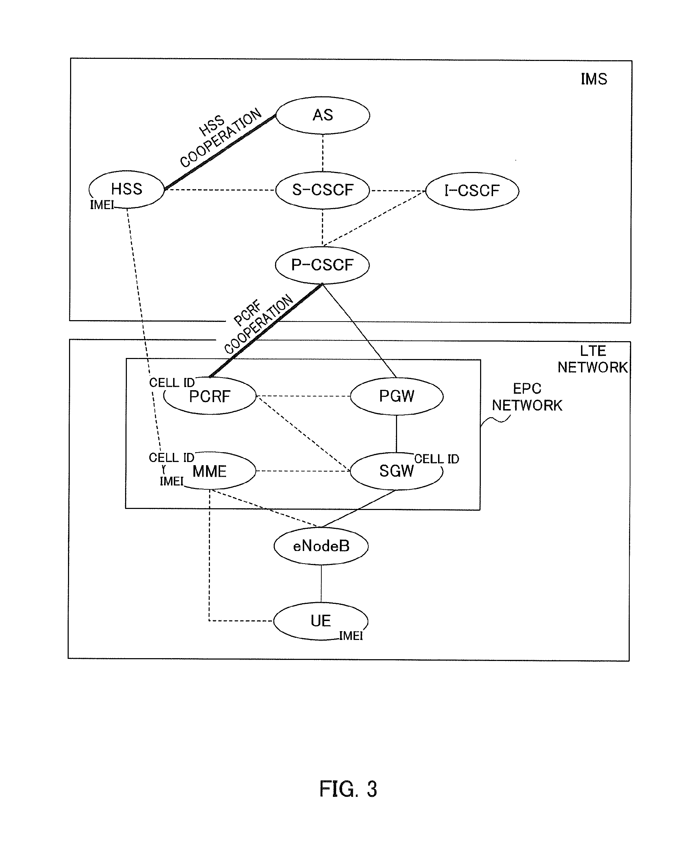

FIG. 3 is a diagram showing a network architecture in the event the access network is an LTE network, in an IMS, according to embodiments 1 and 2 of the present invention. As described above, the global 3GPP standards define a mobile IP transmission network as an EPC network and a service control network as an IMS. In the LTE access system, an eNodeB, which serves as a base station therein, is accommodated by an MME and a SGW.

The mobility management node MME has an interface with a mobile terminal UE that is present in the radio zone of the LTE access system, and performs mobility management of the mobile terminal UE, authorization of the mobile terminal and setup control of the IP transmission route with the mobile terminal. The MME performs the mobility management and authorization of the mobile terminal UE in cooperation with the HSS. Furthermore, the MME carries out setting up of the transmission route of IP packets, which the mobile terminal UE transmits and receives, with respect to the SGW and the eNodeB.

The gateway apparatus SGW performs transmission control of IP packets based on commands by the MME. Upon transmitting IP packets, the SGW performs transmission quality control of the IP packets according to QoS information that is reported from the PCRF.

Furthermore, in the EPC network, a PGW and a PCRF are set up. The PGW has connecting points with the PDN such as the Internet and the IMS, and receives all the IP packets from the PDN to the mobile terminal UE. The PGW transmits the received IP packets for the mobile terminal UE, to the SGW and so on. Furthermore, upon transmitting IP packets, the gateway apparatus PGW performs transmission quality control of the IP packets according to QoS information that is reported from the PCRF.

The priority control node PCRF determines IP packet transmission policies such as the QoS (Quality of Service) and charging rules, for performing transmission quality control in the PGW and the SGW. The IP packet transmission policies are determined from information about service applications requested from the mobile terminal UE, service contract information of the user, and so on, which are reported from the IMS.

The IMS mainly includes a session control function (CSCF) and an application service control function (AS). Furthermore, the IMS includes a user information storage function (HSS).

The call control node CSCF is the function to execute session control, which is the core of the control of the service control network, and sets up and releases communication sessions between mobile terminals, selects the AS according to the terms of service, and transfers an SIP signal, which is the session control protocol. The call control node CSCF is divided into three functional components of the P-CSCF, the S-CSCF, and the I-CSCF.

The P-CSCF is provided in the connecting points with the mobile IP transmission network, connects with the PGW of the mobile IP transmission network, and relays the SIP signal between the S-CSCF and the I-CSCF, and the mobile terminal UE. The P-CSCF checks the validity of the SIP signal that arrives from the mobile terminal UE, and attaches information that is necessary for the session control (charging information and so on), to the S-CSCF. Meanwhile, the P-CSCF removes information that is not to be transmitted to the mobile terminal UE (for example, the caller ID when receiving an "unknown call"). Furthermore, the P-CSCF reports application type information that is required to execute QoS control in the IMS, to the PCRF.

The S-CSCF performs the session control and authorization using user information that is acquired from the HSS. Furthermore, upon receiving a session start signal from the mobile terminal UE, the S-CSCF selects an AS to match the service, according to information of the initial filter criteria, and relays the SIP signal.

The I-CSCF serves as a gate to the IMS, and conceals the S-CSCF from other networks and relays the SIP signal between other networks and the S-CSCF. Upon registration with the IMS and upon the session control, the I-CSCF selects the S-CSCF according to user information of the HSS.

The application server AS cooperates with the mobile terminal and performs common basic control or overall control of each application service. To be more specific, the S-CSCF relays the SIP signal with the mobile terminal UE to the AS, and the AS executes service control. Furthermore, the AS acquires user information related to the application services from the HSS, and performs authorization and authentication for these applications.

The home subscriber server HSS is a database to handle user information of mobile terminals that access the service control network. To be more specific, the HSS holds, for example, private user identifiers, public user identifiers, the address of the S-CSCF to execute session control, contract service information, security information, and information about the initial filter criteria. Furthermore, the HSS reads information from and writes information in the S-CSCF, the I-CSCF, and the AS.

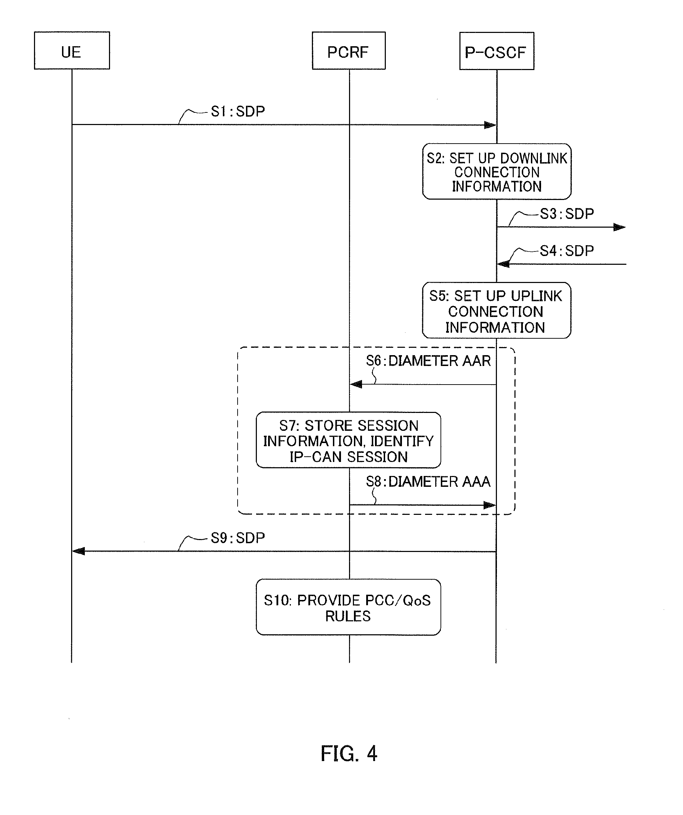

FIG. 4 is a sequence diagram showing the operations of a mobile communication method according to embodiment 1 of the present invention. The sequence shown in FIG. 4 is a sequence of the Diameter Base Protocol, in the event signals for setting up the QoS are transmitted and received between the call control node P-CSCF and the priority control node PCRF, at the timing a mobile terminal initiates a call (PCC (Policy and Charging Control) cooperative control: 3GPP TS 29.213).

First, when a mobile terminal UE initiates a call, the SDP (Session Description Protocol) on an SIP message is executed, from the mobile terminal UE to the call control node P-CSCF, and downlink connection information is set up in the call control node P-CSCF (S1 and S2). Next, uplink connection information is set up in the call control node P-CSCF, by the SDP (S3 to S5). By this means, the bandwidth and resources that are necessary for the services are secured.

After that, the call control node P-CSCF cooperates with the priority control node PCRF and sets up the QoS according to the functions of the mobile terminals UE on the calling side and the receiving side (codec that can be used, and so on) and the conditions of resources of the radio access network (here, the LTE network). That is to say, the call control node P-CSCF transmits a QoS setup request signal to the priority control node, the priority control node PCRF identifies the session of the access network, and the priority control node PCRF transmits an answer signal in response to the QoS setup request signal to the call control node P-CSCF. To be more specific, as shown in FIG. 4, the call control node P-CSCF transmits an AAR (AA-Request) signal of the Diameter Base Protocol to the priority control node PCRF (S6), the priority control node PCRF stores session information and also identifies the session of the access network (IP-CAN) (S7), and the priority control node PCRF transmits an AAA (AA-Answer) signal of the Diameter Base Protocol to the call control node P-CSCF (S8). Then, by means of the SDP, the PCC/QoS rules are provided from the call control node P-CSCF to the mobile terminal UE (S9 and S10).

In this sequence, the priority control node PCRF transmits the serving cell ID of the mobile terminal UE, to the to the call control node P-CSCF, with the answer signal (AAA signal). In this way, cell ID information is superimposed upon the answer signal (AAA signal), and the cell ID information is sent from the LTE network to the IMS (PCRF cooperation). By this means, it is possible to handle reliable information such as cell IDs, in the IMS. This sequence is a sequence at the timing a mobile terminal UE initiates a call, and therefore it is possible to provide the latest, reliable information such as cell IDs to the IMS.

### (Embodiment 2)

With the present embodiment, transmission of IMEI information from the LTE network to the IMS by superimposing the IMEI information on a signal transmitted between the home subscriber server HSS and the application server AS upon providing services, will be described.

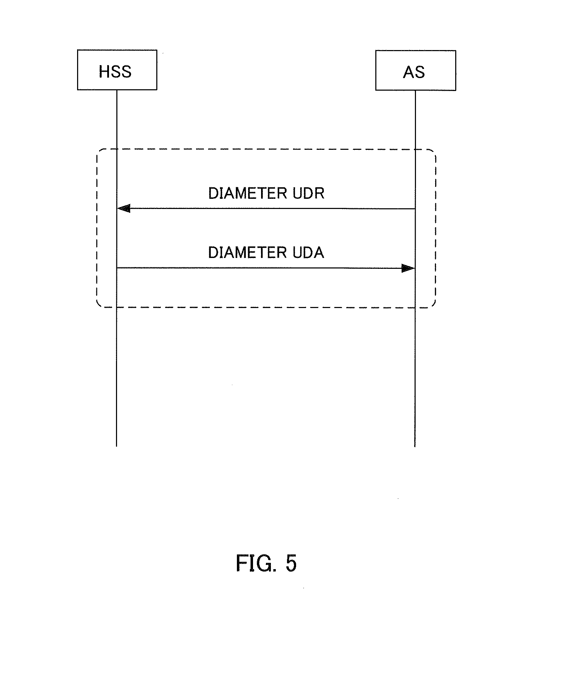

FIG. 5 is a sequence diagram showing the operations of a mobile communication method according to embodiment 2 of the present invention. In the sequence shown in FIG. 5, the application server AS transmits a request signal to communicate upon providing services, to the home subscriber server HSS, and the home subscriber server HSS transmits an answer signal in response to the request signal to the application server AS. To be more specific, as shown in FIG. 5, the application server AS transmits a UDR (User-Data-Request) signal of the Diameter Base Protocol to the home subscriber server HSS, and the home subscriber server HSS transmits a UDA (User-Data-Answer) signal of the Diameter Base Protocol to the application server AS.

By this sequence, the home subscriber server HSS transmits a terminal identification number IMEI to the application server AS with the answer signal (UDA signal). In this way, by superimposing IMEI information on an answer signal (UDA signal), the IMEI information is sent from the LTE network to the IMS (HSS cooperation). In this way, since the IMS is able to acquire information about a mobile terminal, and therefore it is possible to provide services to match the type of the mobile terminal.

### (Embodiment 3)

With the present invention, defining a collection node on the IMS, colleting a cell ID and IMEI from the LTE network by this collection node, and providing these to nodes of the IMS, will be described.

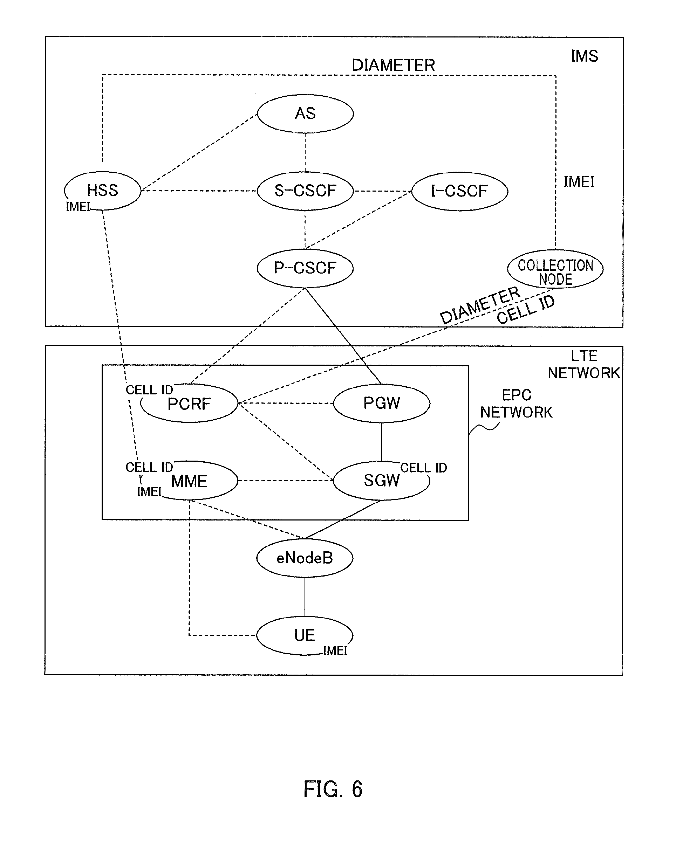

FIG. 6 to FIG. 8 are diagrams showing a network architecture in the event the access network is an LTE network, in an IMS, according to embodiment 3 of the present invention. In FIG. 6 to FIG. 8, the nodes of the IMS and the EPC network are the same as in embodiment 1, and their detailed descriptions will be omitted.

In the architectures shown in FIG. 6 to FIG. 8, a collection node is defined on the IMS. This collection node collects a cell ID and IMEI, and provides these to the nodes of the IMS. The nodes in the IMS acquire the cell ID and IMEI by arbitrary protocols (for example, Diameter/XCAP).

According to the first mode of the present embodiment, as shown in FIG. 6, the collection node collects the cell ID and IMEI from the home subscriber server HSS and the priority control node PCRF. That is to say, the collection server collects the IMEI from the home subscriber server HSS by the Diameter Base Protocol, and collects the cell ID from the priority control node PCRF by the Diameter Base Protocol.

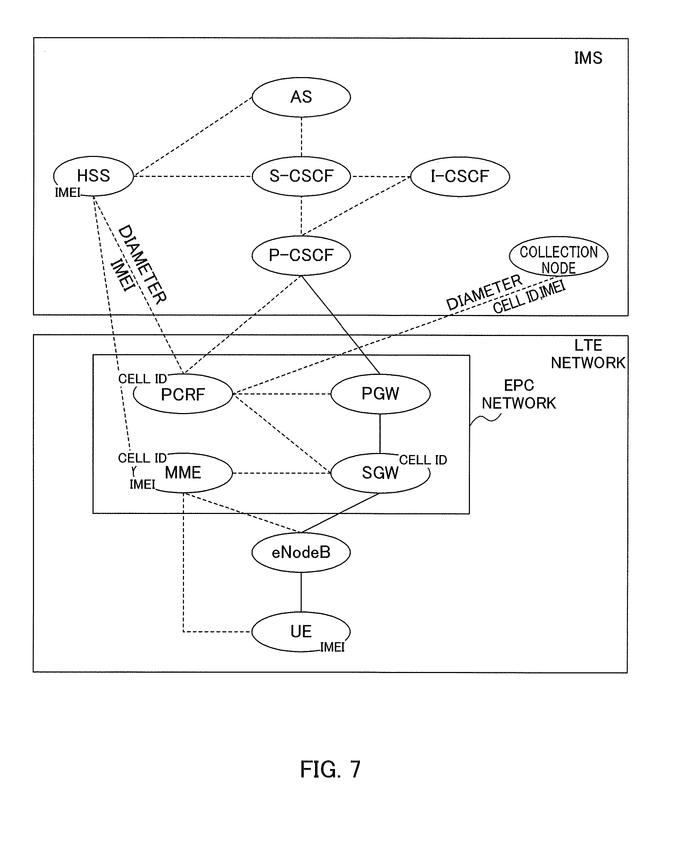

According to a second mode of the present embodiment, as shown in FIG. 7, the collection node collects the cell ID and IMEI from the priority control node PCRF. In this case, the IMEI is collected in the collection node via the priority control node PCRF. That is to say, the priority control node PCRF collects the IMEI from the home subscriber server HSS by the Diameter Base Protocol, and the collection node collects the cell ID and IMEI from the priority control node PCRF by the Diameter Base Protocol.

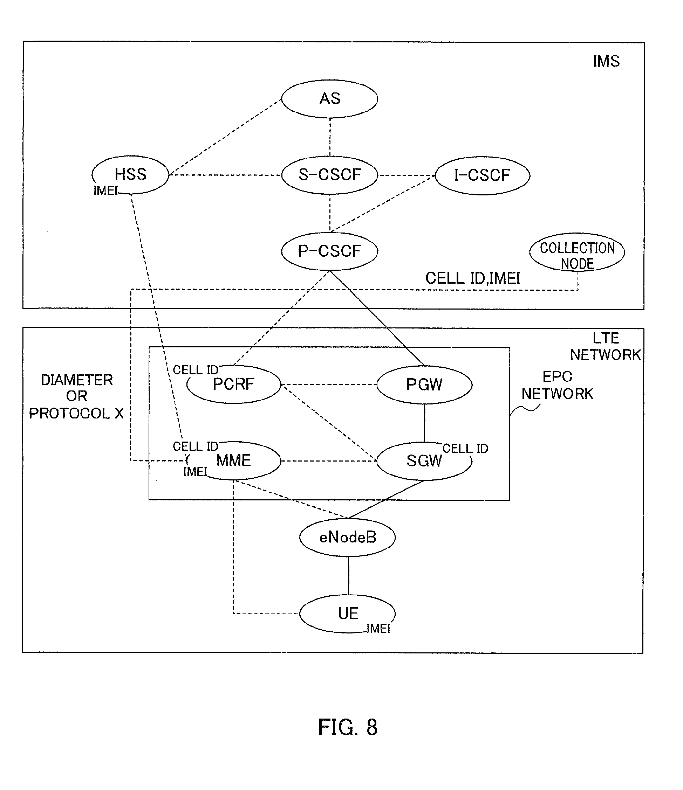

According to a third mode of the present embodiment, as shown in FIG. 8, the collection node collects the cell ID and IMEI from the mobility management node MME. That is to say, the collection node collects the cell ID and IMEI from the mobility management node MME by the Diameter Base Protocol or by other protocols (protocol X).

According to the present embodiment, too, information such as cell IDs is transmitted to the IMS from the LTE network, not from a mobile terminal, so that it is possible to handle reliable information such as cell IDs in the IMS. Furthermore, since information about a mobile terminal can be acquired, it is possible to provide services that match the type of the mobile terminal.

Now, although the present invention has been described in detail with reference to the above embodiments, it should be obvious to a person skilled in the art that the present invention is by no means limited to the embodiments described in this specification. The present invention can be implemented with various corrections and in various modifications, without departing from the spirit and scope of the present invention defined by the recitations of the claims. Consequently, the descriptions in this specification are provided only for the purpose of explaining examples, and should by no means be construed to limit the present invention in any way.

The disclosure of Japanese Patent Application No. 2010-175271, filed on August 4, 2010, including the specification, drawings, and abstract, is incorporated herein by reference in its entirety.

## Claims

1. A mobile communication method comprising the steps of:
at a call control node, transmitting a QoS setup request signal to a priority control node;
at the priority control node, identifying a session of an access network; and
at the priority control node, transmitting an answer signal in response to the QoS setup request signal to the call control node,
wherein the priority control node transmits a serving cell ID of a mobile terminal to the call control node with the answer signal.

2. The mobile communication method according to claim 1, wherein:
the QoS setup request signal is an AAR signal of a Diameter Base Protocol; and
the answer signal is an AAA signal of the Diameter Base Protocol.

3. The mobile communication method according to one of claim 1 and claim 2, wherein the access network is an LTE network.

4. A priority control node that holds a serving cell ID of a mobile terminal, wherein, after a session of an access network is identified, the priority control node transmits an answer signal in response to a QoS setup request signal that has been transmitted from a call control node, to the call control node, with the serving cell ID of the mobile terminal.

5. The priority control node according to claim 4, wherein:
the QoS setup request signal is an AAR signal of a Diameter Base Protocol; and
the answer signal is an AAA signal of the Diameter Base Protocol.

6. The priority control node according to one of claim 4 and claim 5, wherein the access network is an LTE network.
